(19)

**Europäisches Patentamt**
**European Patent Office**
**Office européen des brevets**

(11) **EP 3 226 134 B1**

(12) **EUROPEAN PATENT SPECIFICATION**

(45) Date of publication and mention
of the grant of the patent:
**24.02.2021 Bulletin 2021/08**

(51) Int Cl.:
***G06F 9/50*** *(2006.01)*

(21) Application number: **16305388.7**

(22) Date of filing: **01.04.2016**

(54) **A METHOD AND SYSTEM FOR SCALING RESOURCES, AND A COMPUTER PROGRAM PRODUCT**

VERFAHREN UND SYSTEM ZUM SKALIEREN VON RESSOURCEN UND COMPUTERPROGRAMMPRODUKT

PROCÉDÉ ET SYSTÈME DE MISE À L'ÉCHELLE DE RESSOURCES ET PRODUIT DE PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2017 Bulletin 2017/40**

(73) Proprietor: **Alcatel Lucent
91620 Nozay (FR)**

(72) Inventors:
• **JIAO, Lei**
**Dublin (IE)**
• **LUGONES, Diego**
**Dublin (IE)**
• **JIN, Yue**
**Dublin, 15 (IE)**
• **SALA, Alessandra**
**Dublin, 15 (IE)**
• **HILT, Volker Frederich**
**70435 Stuttgart (DE)**

(74) Representative: **Bryers LLP
7 Gay Street
Bath, Bath and North East Somerset BA1 2PH
(GB)**

(56) References cited:
**WO-A1-2013/097552      US-A1- 2014 143 773
US-B1- 9 043 785**

## Description

TECHNICAL FIELD

Aspects relate, in general, to a method and system for scaling resources, and a computer program product.

BACKGROUND

In a virtualized system comprising multiple virtual machine (VM) instances executing over physical hardware, multiple ones of the VMs can interact or be provisioned to execute a service or application or a component thereof. Typically such services or applications have variable loads that lead to variable resource requirements. If resources are too few and the service is thus under provisioned, the one or more service elements may become overloaded and fail to meet required performance criteria. If the service is overprovisioned, resources are wasted and costs are increased above the optimal level.

Accordingly, it is typical for one or more of the VMs for a service or application (service elements) to be scaled to suit the demand. More specifically, the resources consumed by a service (e.g., CPU, memory, storage, and network resource) can be adjusted in two ways: increasing or decreasing the number of VMs (horizontal scaling) and/or increasing or decreasing the amount of resources that are assigned to the VMs (vertical scaling).

Typically, resource scaling in response to a variation in the load of a system is reactive in that the performance of the service and the system running it is monitored and all elements related to a service or application are scaled up or down as required. However, when workload grows it does not necessarily mean that every VM needs more resources. It may be the case that only a critical subset of the VMs needs to adjust their resources. Furthermore, any VMs that need more resources may not require them simultaneously.

US2014/143773 describes a method and system for monitoring one or parameters in a distributed computing system and modifying a set of resources in the event that a constraint, relating to the parameters, is violated.

US 9 043 785 B1 describes a method and apparatus of monitoring a number of virtual machines operating in an enterprise network, including identifying at least one candidate virtual machine from the virtual machines to optimize its active application load and modifying the candidate virtual machine to change its active application load.

WO 2013/097552 A1 describes a method of scaling including determining, by a computing device, a predicted workload of a multi-tier application for a defined time period, determining a change in application capacity for the predicted workload, and dynamically selecting a scaling strategy for the change in application capacity including vertical scaling and horizontal scaling.

SUMMARY

According to an example, there is provided a method of determining a set of virtual machine instances in a virtualized system to be scaled in response to a variation in workload of a service or application component as provided in claim I. Generating an aggregated metric can include determining, at periodic intervals, utilisation of one or more resources by respective ones of the multiple virtual machines, and generating an aggregated vector sum of the resource utilisations for respective ones of the multiple virtual machines. A node of the directed graph can represent a resource of a virtual machine or an aggregated resource measure of a set of virtual machines that execute the same service or application component. The method can further comprise, for respective ones of the nodes of the directed graph, calculating a single-source shortest path towards every node in the directed graph and generating a vector of the calculated lengths, each vector comprising components representing the time lag of each node in the graph relative to a source node for the vector in question, whereby to provide a serialised set of time lags for the directed graph. The method can further comprise selecting a vector from the set with a minimum norm value, in the event that the selected vector includes negative valued components, adding the absolute value of the minimum valued component to components of the selected vector, and determining a resource to monitor based on the component of the selected vector with the minimum value. The method can further comprise resolving conflicts in the case of horizontal scaling, in which a number of virtual machine instances for the application or service component may be increased or decreased, for the application or service component by adding resources of a virtual machine at the earliest time required by any of the resources or removing resources of a virtual machine at the latest time required by any of the resources, or by adding or removing a virtual machine instance for a resource.

According to an example, there is provided a system including multiple virtual machines in a program executed on physical computing hardware supported by a hypervisor, the multiple virtual machines being operable to execute a service or application component in a cloud infrastructure as provided in claim 7.

The orchestration engine is operable to determine, at periodic intervals, utilisation of one or more resources by respective ones of the multiple virtual machines, and generate an aggregated vector sum of the resource utilisations for respective ones of the multiple virtual machines. A node of the directed graph can represent a resource of a virtual machine or an aggregated resource measure of a set of virtual machines that execute the same service or application component. The orchestration engine can, for respective ones of the nodes of the directed graph, calculate a single-source shortest path towards every node in the directed graph and generate a time-lag vector of the calculated lengths, each vector comprising components representing the time lag of each node in the graph relative to a source node for the vector in question, whereby to provide a serialised set of time lags for the directed graph. The orchestration engine can select a vector from the set with a minimum norm value, in the event that the selected vector includes negative valued components, add the absolute value of the minimum valued component to components of the selected vector, and determine a resource to monitor based on the component of the selected vector with the minimum value. The orchestration engine can resolve conflicts in the case of horizontal scaling, in which a number of virtual machine instances for the application or service component may be increased or decreased, for the application or service component by adding resources of a virtual machine at the earliest time required by any of the resources or removing resources of a virtual machine at the latest time required by any of the resources, or by adding or removing a virtual machine instance for a resource. The orchestration engine can generate a resource request for the service or application component providing an instruction to add or remove one or more virtual machine instances or increase or decrease the amount of resources available to one or more virtual machine instances at times selected according to the time lag values specified in a time-lag vector.

According to an example, there is provided a computer program product, comprising a computer usable medium having computer readable program code embodied therein, said computer readable program code adapted to be executed to implement a method of determining a set of virtual machine instances in a virtualized system to be scaled in response to a variation in workload of a service or application component as provided herein.

BRIEF DESCRIPTION OF THE DRAWINGS

Embodiments will now be described, by way of example only, with reference to the accompanying drawings, in which:

Figure 1 is a schematic representation of a method according to an example;

Figure 2 is a schematic representation of a virtualised system according to an example;

Figures 3a-c are schematic representations relating to the calculation of a partial correlation for a time lag of 2 between two CPU utilizations $X$ and $Y$ excluding the influence of a workload;

Figure 4 is a schematic representation of a partial correlation graph according to an example;

Figures 5a and 5b are schematic representations of two path length vectors according to an example;

Figure 6 is a schematic representation of conflict resolution according to an example;

Figure 7 is a schematic representation of conflict resolution according to an example; and

Figure 8 is a schematic representation of an apparatus such as an orchestration engine or server according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Existing solutions for scaling an application or service (or component thereof) in a virtual infrastructure are typically prohibitive and inapplicable for large-scale complicated cloud services. Multiple service chains/paths, potentially geographically distributed, may exist within the service, which involve and intertwine many VMs making it difficult to identify which resources of which VMs are the right ones that need to be scaled, not to mention when to scale them.

Deploying and leveraging external tools such as traffic monitors and packet inspectors to detect the relationships between VMs or resources for scaling is also costly in terms of performance, due to the intensive resource contention among VMs in consolidated cloud environments. Furthermore, approaches that explore the global many-to-many communications are not scalable and become very limited in cloud environments where a huge number of tenant processes share virtualized resources.

Existing scaling processes fall broadly into three categories:

I) Scaling based on thresholds or rules:

This approach requires setting thresholds or scaling rules for metrics of each VM that runs a different service component. An example of a scaling rule can be "when the average CPU utilization becomes more than 90% for 5 minutes, booting I additional VM." One drawback of this method is that all VMs need to be monitored to check ongoing resource utilizations. In the case of many VMs in a large-scale service, this could be impossible and would require significant effort to determine proper scaling rules for each VM. Another drawback is that it is a reactive approach, i.e., VMs scale in response to workload variations. Booting new VMs requires a considerable amount of time during which the extra workload could not be served and the service quality consequently deteriorates.

2) Scaling based on profiling and modeling:

This approach automatically profiles VMs and builds models of (the number of) VMs against workload. It feeds trial workloads to the service, records the metrics of each VM, and builds a model which can be used to determine how to scale VMs for a real workload in a production environment. The disadvantage of this approach is that the profiling process itself is often resource-intensive and time-consuming, during which time the cloud service will be unable to serve the normal workload. Another shortcoming is that this approach, as well as the thresholds or rules approach as described above, ignores the possible relationships among VMs and treats every VM independently, which is not an accurate reflection of a large-scale service that is composed of multiple VMs.

3) Scaling based on communication dependency:

This approach detects and leverages the communication dependency among VMs for scaling. This method often defines and detects dependency based on communication, which is a very strong assumption and can miss hidden dependencies among VMs. Secondly, to determine the lines of communication between VMs, existing methods use flow or packet inspection, which is impossible in an environment with high resource contention. Thirdly, communication-based dependency is generally not a good indicator for scaling VMs. Two VMs communicating with each other does not always mean that they need to be scaled together, e.g., one VM, which scales for a varying workload constantly sends log messages to the other VM, which may not need to be scaled no matter how the workload varies. That is, the fact that two VMs communicate with each other does not imply relevant resource dependency, and vice versa.

According to an example, a light-weight and efficient method is provided, which is un-intrusive and out of the critical data path. The method can dynamically detect a subset of resources to be scaled and determine when to scale that subset for a large-scale, complex cloud service that faces workload variations. Time-lagged partial correlation values are used, based upon which global scaling decisions can be made using only local VM metrics such as CPU, memory, storage and network utilization.

Information about resource utilization of a distributed service is determined, indirectly, by leveraging local resource metrics in order to build a global understanding of service utilization and how components interact with each other. This information allows creation of a service structure (e.g., a graph or a matrix) that can be used to orchestrate concurrent and accurate scaling actions on those service components that have direct impact on service performance.

This process is fast, scalable, and consumes negligible resource for execution. It involves local VM metrics and is out of the data path of a service and does not therefore profile or use external tools which can be intrusive and influence the normal operation of the service. For a source VM, other related VMs that need to be scaled when the specified source is scaled are determined, and the time at which these resources should be scaled is calculated. Thirdly, it is proactive and predictive, because the computation runs online, periodically and the future time when the scaling operations need to happen, captured by the time lag, is pre-calculated such that the scaling operations can start in advance and complete in time.

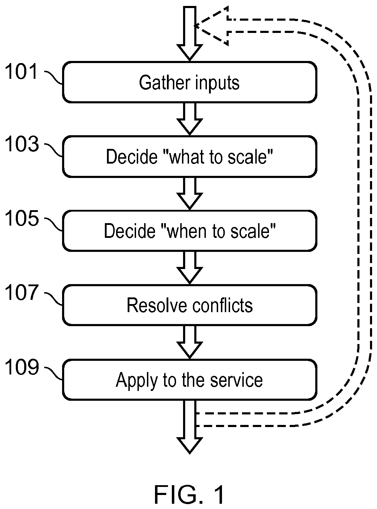

The present method and system is applicable to systems in which both horizontal and vertical scaling can be used. Figure 1 is a schematic representation of a method according to an example. Figure 1 provides a broad overview of certain steps taken in order to determine a subset of virtual machines to scale and generate data representing a time for scaling for each virtual machine. The specific steps are described in more detail below, but briefly, in block 101 input information in the form of metrics for virtual machines is gathered and aggregated, subject to horizontal or vertical scaling. In block 103, resources to scale are identified by computing time-lagged partial correlation graphs, each of which corresponds to a type of resource such as CPU, memory, etc. In the case of vertical scaling, a node (or vertex) in a graph represents the corresponding resource of a single VM; in the case of horizontal scaling, a vertex in a graph represents the corresponding resource of a set of VMs that run the same service components. Each edge in the graphs is weighted by a partial correlation value and a time lag. Those VMs that are not reflected in the graphs are the ones that do not need to adjust their resources.

In block 105, the time lags are serialized using a process to determine the shortest path between nodes in a generated directed graph representing the interactions between virtual machine. A vector norm calculation can be used in order to serialize the time lags. More specifically, the time lags are calibrated in the partial correlation graphs based on a carefully selected vertex, i.e., time lags (which is the value of when to scale one resource relative to when to scale the other) are converted to a value that is relative to a common base node such that it is known when to scale every other resource after the base resource scales.

In block 107, conflicts in decisions made by multiple metrics (in the case of horizontal scaling) are resolved. This is necessary only for horizontal scaling where a VM, rather than a resource, is the smallest block to manipulate. An adjustment of the time lags is performed to resolve the potential conflicts that different types of resources of the VM may desire inconsistent scaling decisions for the VM.

In block 109 resources are scaled and the service/application is operated according to the final result. The procedure outlined in the blocks of figure 1 can be executed periodically so that a cloud service always responds to workload variations dynamically.

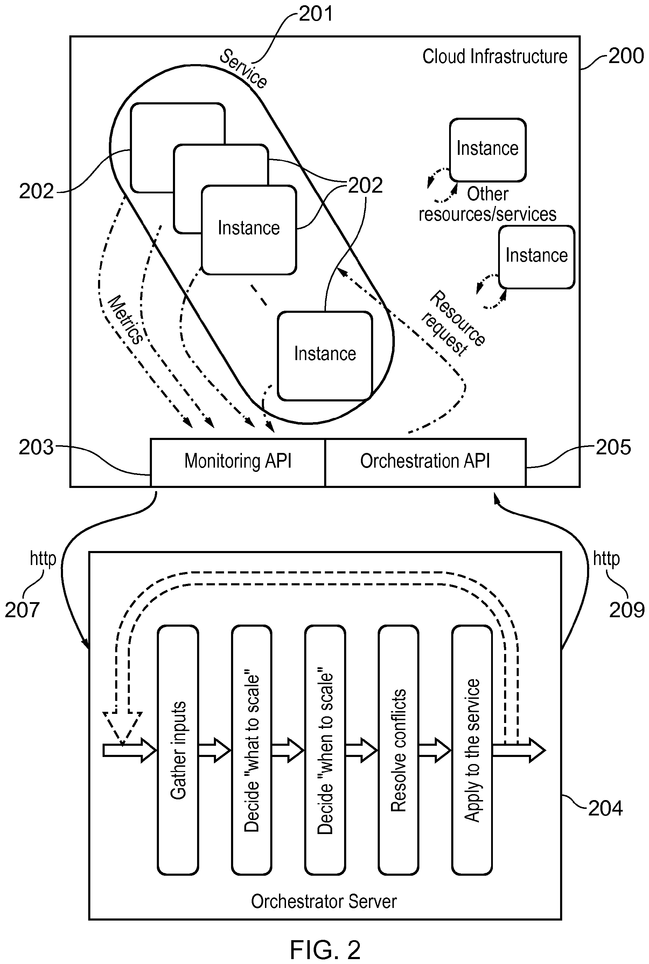

Figure 2 is a schematic representation of a logical architecture of a virtualised system according to an example. In an example, a method as described herein can be embodied within an orchestration framework that operates a given virtualized and distributed service running in an arbitrary cloud infrastructure. A cloud infrastructure 200 provides a pool of computing, storage and networking resources 202 that are virtualized and shared across various services 201. Cloud environments such as OpenStack, Amazon EC2 and Google's Compute and Container Engines can be represented by this architecture, as well as others cloud vendors with Infrastructure as a Service (IaaS) offerings.

Herein, an 'instance' is a collection or sub-set of computing, storage and networking resources that can be aggregated as Virtual Machines as well as other technologies such as Linux containers. Likewise, a service is a collection of instances that serve a particular purpose or application. Examples of services, in this context, are IMS (IP Multimedia Subsystem) network elements, CDN (Content distribution Networks) nodes, N-tier services, and so on. Accordingly, reference herein to a VM is not intended to be limiting, and can be any suitable software container in which a service or application is executed over physical hardware, and which may be spawned, deleted and scaled and so on such as the referenced Linux containers for example.

As is typical, cloud resources are managed, provisioned and monitored by the use of Application Programmer Interfaces (APIs) that allow remote access to various features of the resources. In an example, a monitoring API 203 collects resource metrics (e.g., CPU, memory, storage, network utilization), which are transmitted to (207) and used during the creation of dependency structures using, for example, an orchestration server 204 operable to process data as outlined with reference to figure 1. Once the dependency structures are created, a scaling solution is communicated (209) to the orchestration API 205 in order to instruct scaling of the instances 202 needed to handle an incoming workload. Accordingly, the amount of resources required by a service is determined and then scaling operations are performed. That is, resource metrics (e.g., CPU, memory, storage, network utilization, and others if necessary) of instances (VMs or Linux Containers) are used to compute a time-lagged partial correlation graph of resources and to scale the resources following the graph. The method is generally speaking composed of five stages, where the output of one stage can be input to the next, and which can be executed periodically.

According to an example, metrics of each VM 202 are recorded at some predetermined frequency, such as every 5 seconds for example, and are aggregated as vector sums. For example, for both horizontal and vertical scaling, if a VM has multiple virtual CPUs, all virtual CPU utilizations are aggregated as if there was only a single virtual CPU with the VM; for horizontal scaling, the virtual CPU utilizations of the multiple VMs that run the same service components are further aggregated as if there was only a single VM that runs these service components. This aggregation procedure also applies to other metrics, such as those noted above (for example, memory, storage and/or network utilization).

Resources to be scaled are identified by computing time-lagged partial correlation graphs. That is, to determine which resources need to be scaled, the time-lagged partial correlation of available metrics is determined using cross correlation and partial correlation.

More specifically, the cross correlation $\rho_{XY}(\tau)$ at time lag $\tau (\tau \in Z, |\tau| < T)$ is

$$\rho_{XY}(\tau) = \frac{\sum_{t=1}^{T} (x_t - \overline{x})(y_{t+\tau} - \overline{y})}{\sqrt{\sum_{t=1}^{T} (x_t - \overline{x})^2} \sqrt{\sum_{t=1}^{T} (y_t - \overline{y})^2}}$$

where

$$\overline{x} = \frac{1}{T}\sum_{t=1}^{T} x_t \quad \text{and} \quad \overline{y} = \frac{1}{T}\sum_{t=1}^{T} y_t$$

for two time series data $X = \{x_1, x_2, ..., x_T\}$ and $Y = \{y_1, y_2, ..., y_T\}$ .

In an example, $X$ and $Y$ can be the aggregated CPU utilizations of two VMs, or other metrics such as memory utilizations for example. Across all time lags, the highest cross correlation $\rho_{XY}(\tau_{XY})$ where:

$$\tau_{XY} = \arg\max_{\tau \in Z, |\tau| < T}\{\rho_{XY}(\tau)\}$$

is of the interest.

However, calculating $\rho_{XY}(\tau_{XY})$ straightforwardly for all pairs of resources results in that many pairs may have similar correlation values, which would indicate that those pairs are correlated and need to be scaled. As would be understood by one skilled in the art, these correlations are because the utilizations of the resources of a service, principally, are all driven by the workload of the service.

Thus, according to an example, in order to detect the correlations between resources at a finer level by excluding the influence of the workload, the time-lagged partial correlation is defined as:

$$\rho_{XY \setminus Z}(\tau) = \frac{\rho_{XY}(\tau) - \rho_{XZ}(\tau)\rho_{ZY}(0)}{\sqrt{1 - \rho_{XZ}(\tau)^2}\sqrt{1 - \rho_{ZY}(0)^2}}$$

where $\rho_{XY}(\tau)$ is the cross correlation mentioned as above.

There are three time series involved: $X$ and $Y$ explained as above, as well as $Z = \{z_1, z_2, ..., z_T\}$ , where the former two can represent the CPU utilizations and the latter one can be the workload.

Note that this concept extends the standard definition of partial correlation which does not capture any time lag information. Analogously, $\rho_{XY \setminus Z}(\tau_{XY \setminus Z})$ where

$$\tau_{XY \setminus Z} = \arg\max_{\tau \in Z, |\tau| < T}\{\rho_{XY \setminus Z}(\tau)\}$$

is of the interest.

Calculating $\rho_{XY \setminus Z}(\tau_{XY \setminus Z})$ for all pairs of resources respectively can result in a clear separation: some pairs have higher correlation values while others have lower ones, overcoming the disadvantage of cross correlation.

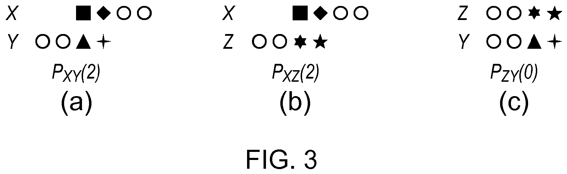

Figures 3a-c are schematic representations relating to the calculation of a partial correlation for a time lag of 2 between two CPU utilizations $X$ and $Y$ excluding the influence of a workload $Z$. Each time series contains 4 samples (which may be the differences between the original samples and their corresponding averages) each of which is represented by a visual symbol as shown.

Samples that are aligned at the same column need to be multiplied. Figures 3a-c visualize the calculation of by how much $X$ is influenced by $Y$ 2 time units ago (i.e., $\rho_{XY}(2)$), by how much $X$ is influenced by $Z$ 2 time units ago (i.e., $\rho_{XZ}(2)$), and by how much $Y$ is influenced by $Z$ with no time lag (i.e., $\rho_{ZY}(0)$). Note that, to exclude the influence of $Z$ from both $X$ and $Y$, $Z$ needs to be shifted by 2 time units which also makes it have no time lag with $Y$ .

A time-lagged partial correlation graph is produced after calculating the time-lagged partial correlation $\rho_{XY \setminus Z}(\tau_{XY \setminus Z})$ for all pairs of resources. More specifically, according to an example, a graph in which every pair of vertices are connected is produced: each vertex or node represents a resource of a VM (in case of vertical scaling) or a resource of a set of VMs that executes the same service components (in case of horizontal scaling), and each edge represents the corresponding time-lagged partial correlation. A threshold can be used to filter out those edges that have weights below the threshold. A suitable threshold value is 0.8. The correlation value calculated is in the range between 0 and I, both inclusive. So in fact any value in this range can be used as the threshold.

Nodes whose incident edges have been filtered out can be removed in order to provide a directed graph comprising a subset of nodes representing resources to be scaled. That is, following the removal of nodes with no incident edges, the vertices that remain are the resources that need to be scaled; the edges that remain represent co-scaling, i.e., if one resource is scaled then the other connected resource also needs to be scaled. The time lag is $\tau_{XY \setminus Z}$ , i.e., scaling one resource only after a time lag of $\tau_{XY \setminus Z}$ when the other is scaled. This graph is a directed graph.

Determining when to scale the resources is determined, in an example, by serializing the time lags via shortest path and vector norm calculations. That is, the time-lagged partial correlation graph has the time lag between two resources, which is the value that indicates when to scale one resource relative to the other. However, it is more desirable to know when to scale every other resource relative to one selected resource. Accordingly, the time lags in a given time-lagged partial correlation graph are serialized as noted below. Note that the correlation values are not important and thus removed; the edge weights in the graph may therefore simply be referred to as the time lags.

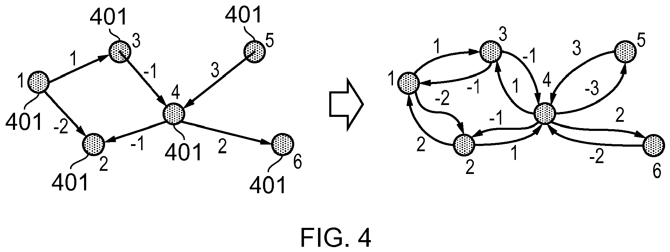

For every edge (i.e., the original edge) in a time-lagged partial correlation graph, the companion edge which is between the same pair of vertices but which has the opposite direction of original edge and uses the negation of the weight of the original edge as its weight is added. This aligns with intuition: for example, if resource I needs to be scaled 2 minutes after resource 2, this is equivalent to saying that resource 2 needs to be scaled 2 minutes earlier than resource I. The original edge and its companion capture these two situations respectively. In this connection, figure 4 is a schematic representation of a partial correlation graph according to an example. Solid circles and arrows represent resources and correlations respectively and the numbers are resource IDs and time lags. The companion edges, with corresponding weights can be seen.

According to an example, each node 401 is used as a source and the single-source shortest path towards every other node in the graph from the source is calculated. The lengths of these paths are recorded in a vector. In the case where the graph has no negative cycles, a standard Bellman-Ford process can be used, which is a known algorithm used to compute shortest paths from a single source vertex to all of the other vertices in a weighted digraph. In the case where there exists negative cycles (i.e., no shortest path exists as one can always loop the negative cycle to reduce the path length), the loop-free shortest path becomes the target instead, which leads to a NP-hard problem, and heuristics can be used to find an approximate shortest path. That is, in the case where there are negative cycles, there is no shortest path as one can always loop the negative cycle to reduce the path length forever. Accordingly, one or some edges in this negative cycle can be removed (so that the cycle is broken and there are no cycles any more). Afterwards, the shortest path can be determined as before.

The rationale is that, firstly, the time lags, no matter positive or negative, should be transitive, e.g., if resource I needs to be scaled 2 minutes after resource 2 and resource 2 needs to be scaled I minute before resource 4, then it should be case that resource I needs to be scaled I minute after resource 4, which is why the path length can represent the accumulated time lag. Secondly, the shortest path is of interest based on the assumption that the correlation is more likely to occur in a short period of time rather than in a longer one.

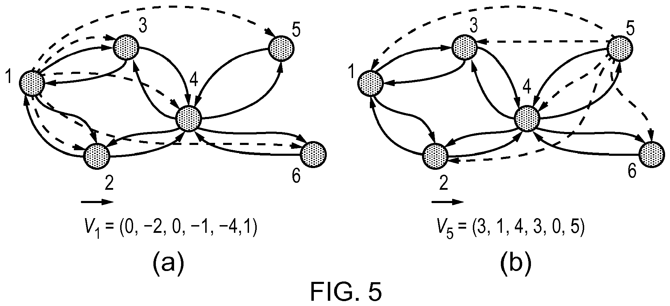

Figures 5a and 5b are schematic representations of two path length vectors according to an example using resources (VMs) I and 5 as the sources, where the $i$th element in the vector records the length of the shortest path from the source to resource$^i$. For example, in figure 5a a path length vector using node I as the source is shown, with path lengths to other resources in the graph. Similarly, figure 5b shows a path length vector using node 5 as the source, with path lengths to other resources in the graph.

For all path length vectors, one vector is selected and used as the result, from which the time at which resources should be scaled can be determined. The selected path length vector has the time lag of every vertex in the graph relative to the source vertex of this vector, i.e., all time lags are serialized and it is now known at which time lag to scale each resource in the service. However, different path length vectors using different sources may give different information about when to scale a resource, and therefore one of the path vectors needs to be selected as the result.

According to an example, a path length vector is selected using a norm function. The norm can be the I-norm or the maximum norm for example, where, for a vector $(x_1, x_2, ..., x_N)$, the I-norm is defined as

$$l_1 = \sum_{i=1}^{N} |x_i|$$

and the maximum norm is defined as $l_{max} = \max_i\{|x_i|\}$.

The intuition behind selecting the vector with the minimum norm value is analogous to what has been mentioned above: the correlation is more likely to occur within a short period of time. Figures 5a and 5b show two vectors, where one may prefer the first to the second, as the first has both a smaller I-norm value ($l_1$ =8) and a smaller maximum norm value ($l_{max}$ = 4). Note that after selecting the vector, one may prefer to make every element of the vector non-negative by adding the minimum value out of the elements to every element, e.g., $\vec{v}_1$ = (0, -2,0, -1, -4,1) will be changed to $\vec{v}_1$ = (4,2,4,3,0,5) so that it is known that only resource 5 needs to be monitored, and when it needs to be scaled, resources I and 3 need to be scaled 4 minutes later, resource 2 needs to be scaled 2 minutes later, and so on.

According to an example, it may be necessary to resolve conflicts of the decisions made by multiple metrics in the case of horizontal scaling. That is, in horizontal scaling, a VM is the smallest block to be manipulated and adding/removing resources is implemented by adding/removing VMs. If multiple metrics (e.g., CPU, memory, network, storage) are used to make scaling decisions, there might be a conflict: for example, in a VM, its CPU resource may need to be increased after I minute but its memory resource may need to be increased after 2 minutes. Therefore, at what time exactly should the increase of CPU or memory be implemented by adding one more VM that runs the same service components. According to an example a VM is added I minute later so that both the additional CPU and memory are ready when they are needed, although the additional memory is ready I minute before actually required.

Generally, there are two types of conflicts that need to be resolved:

Type I Conflict: To resolve the first type of conflict where multiple resources require adding (or removing) VMs at different times, the present method ensures that every VM is provided at the earliest time as required by any of its resources and thus all resources are scaled in time by adopting the following approach. As noted above multiple path length vectors are produced, each of which corresponds to a metric. Recall that a path length vector is a set of time values relative to the absolute time to scale the resource that has the time lag 0.

Let $\vec{v}_m$ denote the path length vector corresponding to the metric $m \in$ M, $\vec{v_{mi}}$ denote the time lag for resource $i$ (or more precisely, the VM that contains resource $i$) in $\vec{v_m}$, and $t_{m,base}$, (as will be further explained below) denote the absolute time of scaling the resource that has the time lag 0. Given all of these, the absolute time to manipulate the VM that runs the same service components as the VM $^i$ is calculated as $t_i = \min_{m \in M}\{t_{m,base} + \overrightarrow{v_{mi}}\}$. Note that a path length vector may need to add some values of $+\infty$ in order to match the length of other path length vectors.

An example is as follows. Suppose the path length vector for CPU is $\overrightarrow{v_{cpu}}$ = (4,2,4,3,0,5) and that for memory is $\overrightarrow{v_{mem}}$ = (0,4,1), and suppose $t_{cpu,base}$ = 2 and $t_{mem,base}$ =1. The first thing is changing $\overrightarrow{v_{mem}}$ to $\overrightarrow{v_{mem}}$ = (0,4,1, $+\infty$, $+\infty$, $+\infty$) . Afterwards, applying the $t_i$ formula above for every $i$ gives a vector of (1,4,2,5,2,7), which represents the absolute times to add the corresponding VMs.

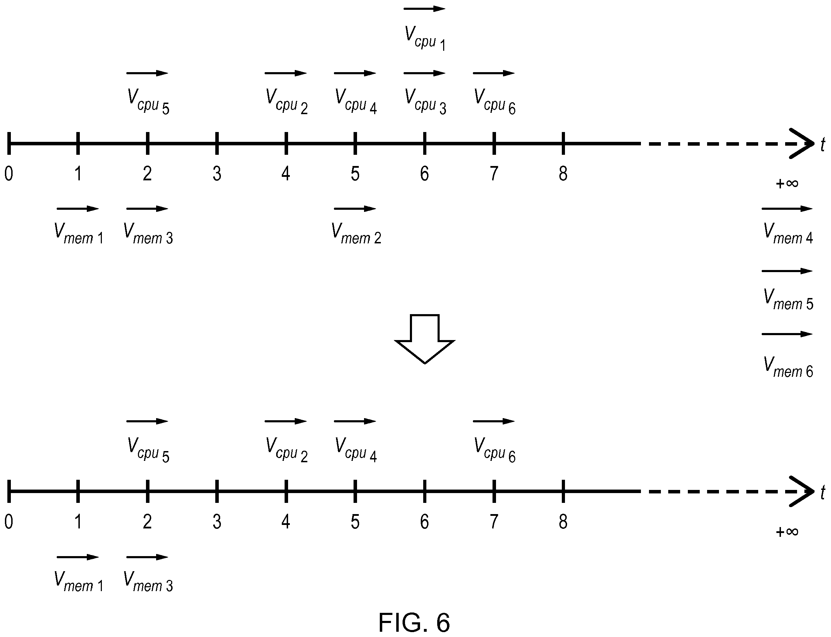

This procedure is visualized in figure 6, which is a schematic representation of conflict resolution according to an example, where for ease of presentation, $t_{m,base}$ is already merged into $\overrightarrow{v_m}$ .

As can be seen in figure 6, every VM is provided at the earliest time as required by any of its resources, and so, for the sake of argument, as resource I is scaled at time I for memory, the corresponding CPU scaling for this resource at time 6 is removed, and so on.

To resolve the second type of conflict, where some resources require adding a VM and others require removing this VM, the present method takes the following approach. For VM$^i$, all of the absolute time values are collected in a set or a vector as $\{t_{m,base} + \overrightarrow{v_{mi}}\}_{m \in M}$ , where each element has also been associated with the property of either "adding the VM" or "removing the VM". The approach sorts the vector elements in ascending order. For every group of consecutive elements with the same property, we only keep one element and delete the other elements in the following manner. If a group of consecutive elements have the property of adding a VM, we keep the first element and delete the others in the same group. If a group of consecutive elements have the property of removing a VM, we keep the last element and delete the others in the same group. This approach guarantees that a VM is added at the earliest time when it is needed by any of its resources and removed at the latest time when it is not needed by any of its resources..

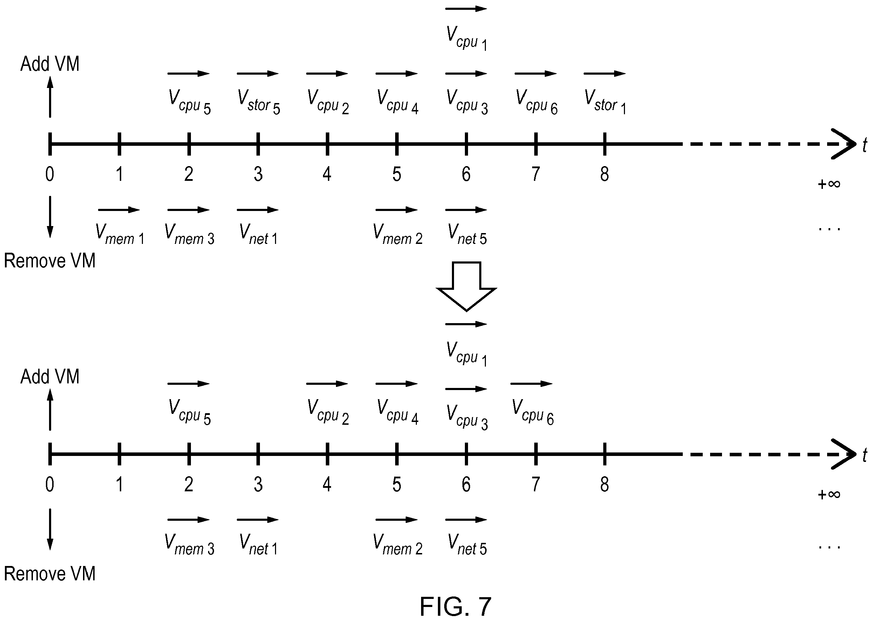

Figure 7 is a schematic representation of conflict resolution according to an example. Suppose four metrics are used: CPU, memory, storage and network utilization. The former two are the same as in figure 6 and the latter two are captured by $\overrightarrow{v_{stor}}$ = (8, $+\infty$, $+\infty$, $+\infty$, 3, $+\infty$) and $\overrightarrow{v_{net}}$ = (3, $+\infty$, $+\infty$, $+\infty$, 6, $+\infty$).

We also assume that CPU and storage require adding VMs and that memory and network require removing VMs. All four vectors are drawn in the top part of figure 7, and the approach described above will produce that shown the bottom subfigure. This means, for example, adding one more VM 5 as required by CPU at time 2, and removing it as required by network at time 6; although storage also requires adding VM 5 at time 3, $\overrightarrow{v_{stor5}}$ is eliminated because VM 5 is already added at time 2.

The final part of the process operates the service by adding or removing VMs in the case of horizontal scaling or increasing or decreasing the amount of resources in the case of vertical scaling, at the time lags specified by the result after conflict resolution as described above. In a real-world cloud system, one approach to store and process this result can be by using a set of key-value pairs where each entry is in the format of {RESOURCE_ID, TIME_LAG} for example.

Only a minimum amount of information is needed as input. The first is the absolute time of when to scale the one resource that is being monitored, denoted as $t_{m,base}$ previously. In order to get this, existing methods can be used, such as rule-based ones, e.g., the absolute time is when the average utilization of existing resources is above 90% for 5 minutes for example. Having this information, it is then possible to tell the absolute times of when to scale every other resource/VM, as shown above.

The second issue is the number of VMs or the amount of resources that need to be added or removed per scaling operation. This information can be pre-specified. Note that, given these two inputs, the focus is the following: firstly, when one resource needs to be scaled at some time, at what time relative to it the "other related" resources also need to be scaled and which (of multiple VMs in system for example) these "other related" resources are. Secondly, only one resource needs to be monitored (and which this one resource is).

The necessary mechanisms to ensure concurrency and handle the scaling delays are therefore provided. The scaling operations of any two resources with the same time lag can always be executed concurrently. Furthermore, the time duration for executing a scaling operation may also need to be taken into account so that one may desire to start to scale the resource at some time before the time that is specified by the time lag so that the scaling operation can be completed on time. The method described is proactive compared with existing reactive ones, in the sense that the resources can be ready before the time that is specified by the time lag, because the time lag is calculated in advance.

Thus, a general, efficient, and proactive method that only requires a minimum and almost zero manual intervention in order to scale a wide range of cloud services, either horizontally or vertically is provided. It is fast, scalable, and consumes negligible resource for execution. It involves only local VM metrics which are out of the data path of the service. Second, it requires extremely moderate manual touch or pre-specified settings, and afterwards calculates everything needed automatically. Last, it is proactive, predictive, and can execute online to calculate when future scaling operations need to occur so that these operations can start in advance and complete in time.

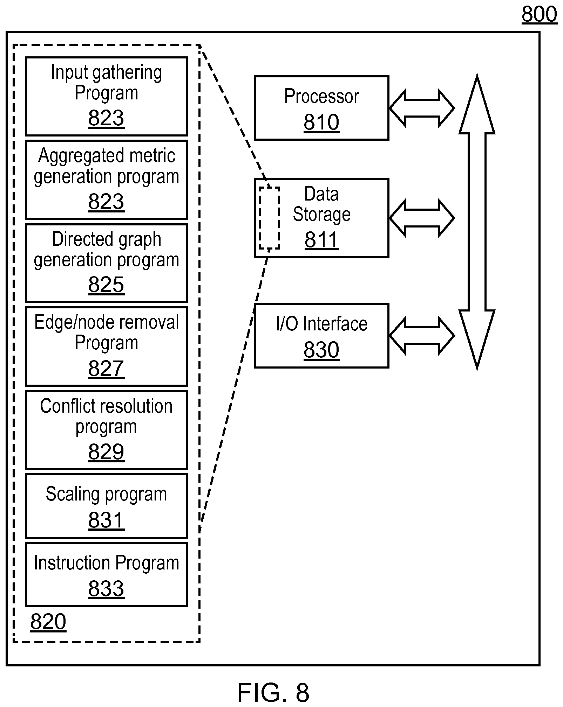

Figure 8 is a schematic representation of an apparatus 800 such as orchestration engine or server 204. The apparatus 800 includes processor 810, data storage 811, and I/O interface 830. The processor 810 controls the operation of the apparatus 800. The processor 810 cooperates with the data storage 811.

The data storage 811 stores appropriate ones of programs 820 executable by the processor 810. Data storage 811 may also optionally store program data such as threshold values or the like as appropriate. The processor-executable programs 820 may include an input gathering program 821, aggregated metric generation program 823, directed graph generation program 825, edge/node removal Program 827, and conflict resolution program 829. Other programs may be provided to perform other processes as appropriate and as described above.

Processor 810 cooperates with processor-executable programs 820. The I/O interface 830 cooperates with processor 810 and an I/O interface program to support communications over communication channels 207, 209 of FIG. 1 as appropriate and as described above.

In an example, the information gathering program 823 can perform the step 101 of FIG. 1 as appropriate and as described above; the aggregated metric generation program 825 can generate respective sets of aggregated metrics for respective ones of multiple virtual machines as appropriate and as described above; the directed graph generation program 825 can generate a directed graph as appropriate and as described above; the edge/node removal program 827 can remove edges of the directed graph whose weight falls below a threshold measure and remove nodes whose incident edges have been removed; and the Conflict resolution program 829 can resolve conflicts in the case of horizontal scaling for the application or service component by adding resources of a virtual machine at the earliest time required by any of the resources or by removing resources of a virtual machine at the latest time required by any of the resources, or by adding or removing a virtual machine instance for a resource. A scaling program 831 can be provided to scale the weight of remaining edges of the directed graph relative to a selected node of the graph.

Programs 820 can include a program 833 to generate a resource request for the service or application component which is operable to provide an instruction to add or remove one or more virtual machine instances or increase or decrease the amount of resources available to one or more virtual machine instances at times selected according to the time lag values specified in a time-lag vector.

In some embodiments, the processor 810 may include resources such as processors / CPU cores, the I/O interface 830 may include any suitable network interfaces, or the data storage 811 may include memory or storage devices. Moreover the apparatus 800 may be any suitable physical hardware configuration such as: one or more server(s), blades consisting of components such as processor, memory, network interfaces or storage devices. In some of these embodiments, the apparatus 800 may include cloud network resources that are remote from each other.

In some embodiments, the apparatus 800 may be virtual machine. In some of these embodiments, the virtual machine may include components from different machines or be geographically dispersed. For example, the data storage 811 and the processor 810 may be in two different physical machines.

When processor-executable programs 820 are implemented on a processor 810, the program code segments combine with the processor to provide a unique device that operates analogously to specific logic circuits.

Although depicted and described herein with respect to embodiments in which, for example, programs and logic are stored within the data storage and the memory is communicatively connected to the processor, it should be appreciated that such information may be stored in any other suitable manner (e.g., using any suitable number of memories, storages or databases); using any suitable arrangement of memories, storages or databases communicatively connected to any suitable arrangement of devices; storing information in any suitable combination of memory(s), storage(s) or internal or external database(s); or using any suitable number of accessible external memories, storages or databases. As such, the term data storage referred to herein is meant to encompass all suitable combinations of memory(s), storage(s), and database(s).

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. A method of determining a set of virtual machine instances (202) in a virtualized system to be scaled in response to a variation in workload of a service or application component, the method carried out by an orchestration engine (204) of the system, the method comprising:

   generating respective sets of aggregated metrics for respective ones of multiple virtual machines;
   generating a directed graph in which nodes (401) representing a resource of one or more of the multiple virtual machines (202) are linked using one or more edges, the weight of each of the edges representing a time-lagged partial correlation value and a time lag value representing a measure of when to scale one resource relative to another;
   reducing the number of virtual machines (202) to be monitored and scaled to provide the set of virtual machine instances by removing edges of the directed graph whose weight falls below a threshold measure and removing nodes whose incident edges have been removed;

scaling the weight of remaining edges of the directed graph relative to a selected node of the graph, whereby to provide modified time lag values at which respective ones of the virtual machine instances of the set are to be scaled; and scaling respective ones of the virtual machine instances (202) in the set relative to one another according to respective ones of the modified time lag values in response to the variation in workload of the service or application component.

2. A method as claimed in claim I, wherein generating an aggregated metric includes:

determining, at periodic intervals, utilisation of one or more resources by respective ones of the multiple virtual machines (202); and generating an aggregated vector sum of the resource utilisations for respective ones of the multiple virtual machines (202).

3. A method as claimed in claim I or 2, wherein a node (401) of the directed graph represents a resource of a virtual machine (202) or an aggregated resource measure of a set of virtual machines that execute the same service or application component.

4. A method as claimed in any preceding claim, further comprising:
for respective ones of the nodes (401) of the directed graph, calculating a single-source shortest path towards every node in the directed graph and generating a vector of the calculated lengths, each vector comprising components representing the time lag of each node in the graph relative to a source node for the vector in question, whereby to provide a serialised set of time lags for the directed graph.

5. A method as claimed in claim 4, further comprising:

selecting a vector from the set with a minimum norm value;
in the event that the selected vector includes negative valued components, adding the absolute value of the minimum valued component to components of the selected vector; and determining a resource to monitor based on the component of the selected vector with the minimum value.

6. A method as claimed in claim 4 or 5, further comprising:
resolving conflicts in the case of horizontal scaling for the application or service component, in which a number of virtual machine instances for the application or service component may be increased or decreased, by adding resources of a virtual machine at the earliest time required by any of the resources or removing resources of a virtual machine at the latest time required by any of the resources, or by adding or removing a virtual machine instance for a resource.

7. A system including multiple virtual machines (202) in a program executed on physical computing hardware supported by a hypervisor, the multiple virtual machines being operable to execute a service or application component in a cloud infrastructure, the system including:
an orchestration engine (204) configured to:

generate respective sets of aggregated metrics for respective ones of multiple virtual machines (202);
generate a directed graph in which nodes (401) representing a resource of one or more of the multiple virtual machines (202) are linked using one or more edges, the weight of each of the edges representing a time-lagged partial correlation value and a time lag value representing a measure of when to scale one resource relative to another;
reduce the number of virtual machines (202) to be monitored and scaled to provide the set of virtual machine instances by removing edges of the directed graph whose weight falls below a threshold measure and removing nodes whose incident edges have been removed;
scale the weight of remaining edges of the directed graph relative to a selected node of the graph, whereby to provide modified time lag values at which respective ones of the virtual machine instances of the set are to be scaled; and scale respective ones of the virtual machine instances (202) in the set relative to one another according to respective ones of the modified time lag values in response to the variation in workload of the service or application component.

8. A system as claimed in claim 7, wherein the orchestration engine is operable to:

determine, at periodic intervals, utilisation of one or more resources by respective ones of the multiple virtual machines (202); and generate an aggregated vector sum of the resource utilisations for respective ones of the multiple virtual machines (202).

9. A system as claimed in claim 7 or 8, wherein a node (401) of the directed graph represents a resource of a virtual machine (202) or an aggregated resource measure of a set of virtual machines (202) that execute the same service or application component.

10. A system as claimed in any claims 7 to 9, wherein the orchestration engine (204) is operable to: for respective ones of the nodes (401) of the directed graph, calculate a single-source shortest path towards every node in the directed graph and generate a time-lag vector of the calculated lengths, each vector comprising components representing the time lag of each node in the graph relative to a source node for the vector in question, whereby to provide a serialised set of time lags for the directed graph.

11. A system as claimed in claim 10, wherein the orchestration engine (204) is operable to: select a vector from the set with a minimum norm value;

in the event that the selected vector includes negative valued components, add the absolute value of the minimum valued component to components of the selected vector; and determine a resource to monitor based on the component of the selected vector with the minimum value.

12. A system as claimed in claim 10 or 11, wherein the orchestration engine (204) is operable to: resolve conflicts in the case of horizontal scaling for the application or service component, in which a number of virtual machine instances for the application or service component may be increased or decreased, by adding resources of a virtual machine at the earliest time required by any of the resources or removing resources of a virtual machine at the latest time required by any of the resources, or by adding or removing a virtual machine instance for a resource.

13. A system as claimed in any of claims 7 to 12, wherein the orchestration engine (204) is operable to: generate a resource request for the service or application component providing an instruction to add or remove one or more virtual machine instances or increase or decrease the amount of resources available to one or more virtual machine instances at times selected according to the time lag values specified in a time-lag vector.

14. A computer program product, comprising a computer usable medium having computer readable program code embodied therein, said computer readable program code adapted to be executed to implement a method of determining a set of virtual machine instances in a virtualized system to be scaled in response to a variation in workload of a service or application component as claimed in any of claims I to 6, when executed by an orchestration engine (204) of the system.

**Patentansprüche**

1. Verfahren zum Bestimmen eines Satzes von virtuellen Maschineninstanzen (202) in einem virtualisierten System, die in Reaktion auf eine Variation der Arbeitslast einer Dienst-oder Anwendungskomponente zu skalieren sind, wobei das Verfahren von einer Orchestrierungsengine (204) des Systems durchgeführt wird, wobei das Verfahren Folgendes umfasst:

Erzeugen von jeweiligen Sätzen von aggregierten Metriken für jeweilige einer Vielzahl von virtuellen Maschinen;
Erzeugen eines gerichteten Graphen, bei dem Knoten (401), die eine Ressource von einer oder mehreren der Vielzahl von virtuellen Maschinen (202) repräsentieren, unter Verwendung von einer oder mehreren Kanten verbunden sind, wobei das Gewicht von jeder der Kanten einen zeitverzögerten partiellen Korrelationswert und einen Zeitverzögerungswert repräsentiert, der ein Maß dazu repräsentiert, wann eine Ressource relativ zu einer anderen zu skalieren ist;
Reduzieren der Anzahl von virtuellen Maschinen (202), die zu überwachen und zu skalieren sind, um durch Entfernen von Kanten des gerichteten Graphen, deren Gewicht unter ein Schwellwertmaß fällt, und Entfernen von Knoten, deren inzidente Kanten entfernt wurden, einen Satz von virtuellen Maschineninstanzen bereitzustellen;
Skalieren des Gewichts von verbleibenden Kanten des gerichteten Graphen relativ zu einem ausgewählten Knoten des Graphen, wodurch modifizierte Zeitverzögerungswerte bereitgestellt werden sollen, bei denen jeweilige der virtuellen Maschineninstanzen des Satzes zu skalieren sind; und
Skalieren von jeweiligen der virtuellen Maschineninstanzen (202) in dem Satz relativ zueinander gemäß jeweiligen der modifizierten Zeitverzögerungswerte in Reaktion auf die Variation der Arbeitslast der Dienst- oder Anwendungskomponente.

2. Verfahren nach Anspruch 1, wobei das Erzeugen einer aggregierten Metrik Folgendes beinhaltet:

Bestimmen einer Nutzung von einer oder mehreren Ressourcen durch jeweilige der Vielzahl von virtuellen Maschinen (202) in periodischen Intervallen; und
Erzeugen einer aggregierten Vektorsumme der Ressourcennutzungen für jeweilige der Vielzahl von virtuellen Maschinen (202).

3. Verfahren nach Anspruch 1 oder 2, wobei ein Knoten (401) des gerichteten Graphen eine Ressource einer virtuellen Maschine (202) oder ein aggregiertes Ressourcenmaß eines Satzes von virtuellen Maschinen, die dieselbe Dienst- oder Anwendungskomponente ausführen, repräsentiert.

4. Verfahren nach einem der vorhergehenden Ansprüche, das ferner Folgendes umfasst:
für jeweilige der Knoten (401) des gerichteten Graphen Berechnen eines kürzesten Einzelursprungspfades zu jedem Knoten im gerichteten Graphen und Erzeugen eines Vektors der berechneten Längen, wobei jeder Vektor Komponenten umfasst, die für den betreffenden Vektor die Zeitverzögerung jedes Knotens im Graphen relativ zu einem Ursprungsknoten repräsentieren, wodurch ein serialisierter Satz von Zeitverzögerungen für den gerichteten Graphen bereitgestellt werden soll.

5. Verfahren nach Anspruch 4, das ferner Folgendes umfasst:

   Auswählen eines Vektors aus dem Satz mit einem minimalen Normwert;
   in dem Fall, in dem der ausgewählte Vektor negativ bewertete Komponenten beinhaltet, Hinzufügen des Absolutwerts der minimal bewerteten Komponente zu Komponenten des ausgewählten Vektors; und
   Bestimmen einer zu überwachenden Ressource auf Basis der Komponente des ausgewählten Vektors mit dem minimalen Wert.

6. Verfahren nach Anspruch 4 oder 5, das ferner Folgendes umfasst:
Lösen von Konflikten im Fall einer horizontalen Skalierung für eine Anwendungs- oder Dienstkomponente, bei denen durch Hinzufügen von Ressourcen einer virtuellen Maschine zur frühesten Zeit, die für eine der Ressourcen erforderlich ist, oder Entfernen von Ressourcen einer virtuellen Maschine zur spätesten Zeit, die für die Ressourcen erforderlich ist, oder durch Hinzufügen oder Entfernen einer virtuellen Maschineninstanz für eine Ressource eine Anzahl von virtuellen Maschineninstanzen für die Anwendungs- oder Dienstkomponente erhöht oder verringert werden kann.

7. System, das in einem Programm, das auf physischer Datenverarbeitungshardware ausgeführt wird, die von einem Hypervisor unterstützt wird, eine Vielzahl von virtuellen Maschinen (202) beinhaltet, wobei die Vielzahl von virtuellen Maschinen betreibbar sind, eine Dienst- oder Anwendungskomponente in einer Cloudinfrastruktur auszuführen, wobei das System Folgendes beinhaltet:
eine Orchestrierungsengine (204), die zu Folgendem ausgelegt ist:

   Erzeugen von jeweiligen Sätzen von aggregierten Metriken für jeweilige einer Vielzahl von virtuellen Maschinen (202);
   Erzeugen eines gerichteten Graphen, bei dem Knoten (401), die eine Ressource von einer oder mehreren der Vielzahl von virtuellen Maschinen (202) repräsentieren, unter Verwendung von einer oder mehreren Kanten verbunden sind, wobei das Gewicht von jeder der Kanten einen zeitverzögerten partiellen Korrelationswert und einen Zeitverzögerungswert repräsentiert, der ein Maß dazu repräsentiert, wann eine Ressource relativ zu einer anderen zu skalieren ist;
   Reduzieren der Anzahl von virtuellen Maschinen (202), die zu überwachen und zu skalieren sind, um durch Entfernen von Kanten des gerichteten Graphen, deren Gewicht unter ein Schwellwertmaß fällt, und Entfernen von Knoten, deren inzidente Kanten entfernt wurden, einen Satz von virtuellen Maschineninstanzen bereitzustellen;
   Skalieren des Gewichts von verbleibenden Kanten des gerichteten Graphen relativ zu einem ausgewählten Knoten des Graphen, wodurch modifizierte Zeitverzögerungswerte bereitgestellt werden sollen, bei denen jeweilige der virtuellen Maschineninstanzen des Satzes zu skalieren sind; und
   Skalieren von jeweiligen der virtuellen Maschineninstanzen (202) in dem Satz relativ zueinander gemäß jeweiligen der modifizierten Zeitverzögerungswerte in Reaktion auf die Variation der Arbeitslast der Dienst- oder der Anwendungskomponente.

8. System nach Anspruch 7, wobei die Orchestrierungsengine zu Folgendem betreibbar ist:

   Bestimmen einer Nutzung von einer oder mehreren Ressourcen durch jeweilige der Vielzahl von virtuellen Maschinen (202) in periodischen Intervallen; und
   Erzeugen einer aggregierten Vektorsumme der Ressourcennutzungen für jeweilige der Vielzahl von virtuellen Maschinen (202).

9. System nach Anspruch 7 oder 8, wobei ein Knoten (401) des gerichteten Graphen eine Ressource einer virtuellen Maschine (202) oder ein aggregiertes Ressourcenmaß eines Satzes von virtuellen Maschinen (202), die dieselbe Dienst-oder Anwendungskomponente ausführen, repräsentiert.

10. System nach einem der Ansprüche 7 bis 9, wobei die Orchestrierungsengine (204) zu Folgendem betreibbar ist:
für jeweilige der Knoten (401) des gerichteten Graphen Berechnen eines kürzesten Einzelursprungspfades zu jedem Knoten im gerichteten Graphen und Erzeugen eines Zeitverzögerungsvektors der berechneten Längen, wobei jeder Vektor Komponenten umfasst, die für den betreffenden Vektor die Zeitverzögerung jedes Knotens im Graphen relativ zu einem Ursprungsknoten repräsentieren, wodurch ein serialisierter Satz von Zeitverzögerungen für den gerichteten Graphen bereitgestellt werden soll.

11. System nach Anspruch 10, wobei die Orchestrierungsengine (204) zu Folgendem betreibbar ist:

Auswählen eines Vektors aus dem Satz mit einem minimalen Normwert;
in dem Fall, in dem der ausgewählte Vektor negativ bewertete Komponenten beinhaltet, Hinzufügen des Absolutwerts der minimal bewerteten Komponente zu Komponenten des ausgewählten Vektors; und
Bestimmen einer zu überwachenden Ressource auf Basis der Komponente des ausgewählten Vektors mit dem minimalen Wert.

12. System nach Anspruch 10 oder 11, wobei die Orchestrierungsengine (204) zu Folgendem betreibbar ist:
Lösen von Konflikten im Fall einer horizontalen Skalierung für eine Anwendungs- oder Dienstkomponente, bei denen durch Hinzufügen von Ressourcen einer virtuellen Maschine zur frühesten Zeit, die für eine der Ressourcen erforderlich ist, oder Entfernen von Ressourcen einer virtuellen Maschine zur spätesten Zeit, die für die Ressourcen erforderlich ist, oder durch Hinzufügen oder Entfernen einer virtuellen Maschineninstanz für eine Ressource eine Anzahl von virtuellen Maschineninstanzen für die Anwendungs- oder Dienstkomponente erhöht oder verringert werden kann.

13. System nach einem der Ansprüche 7 bis 12, wobei die Orchestrierungsengine (204) zu Folgendem betreibbar ist:
Erzeugen einer Ressourcenanforderung für die Dienst- oder Anwendungskomponente, die eine Anweisung zum Hinzufügen oder Entfernen von einer oder mehreren virtuellen Maschineninstanzen oder Erhöhen oder Verringern der Menge von Ressourcen die zu Zeiten, die gemäß den Zeitverzögerungswerten, die in einem Zeitverzögerungsvektor spezifiziert sind, für eine oder mehrere virtuelle Maschineninstanzen verfügbar sind, bereitstellt.

14. Computerprogrammprodukt, das ein von einem Computer verwendbares Medium umfasst, auf dem sich computerlesbarer Programmcode befindet, wobei der computerlesbare Programmcode angepasst ist, ausgeführt zu werden, um ein Verfahren zum Bestimmen eines Satzes von virtuellen Maschineninstanzen in einem virtualisierten System, die in Reaktion auf eine Variation der Arbeitslast einer Dienst- oder Anwendungskomponente zu skalieren sind, nach einem der Ansprüche 1 bis 6 zu implementieren, wenn es von einer Orchestrierungsengine (204) des Systems ausgeführt wird.

## Revendications

1. Procédé de détermination d'un ensemble d'instances de machines virtuelles (202) dans un système virtualité, devant être mises à l'échelle en réponse à une variation de la charge de travail d'une composante d'application ou de service, le procédé étant effectué par un moteur d'orchestration (204) du système, le procédé comprenant :

la génération d'ensembles respectifs de métriques agrégées pour des machines respectives parmi de multiples machines virtuelles ;
la génération d'un graphique dirigé, dans lequel des nœuds (401) représentant une ressource d'une ou plusieurs des multiples machines virtuelles (202) sont reliés en utilisant un ou plusieurs bords, le poids de chacun des bords représentant une valeur de corrélation partielle décalée dans le temps et une valeur de décalage dans le temps représentant une mesure du moment où il faut mettre à l'échelle une ressource par rapport à une autre ;
la réduction du nombre de machines virtuelles (202) devant être surveillées et mises à l'échelle pour fournir l'ensemble d'instances de machines virtuelles en retirant les bords du graphique dirigé dont le poids tombe en dessous d'une mesure seuil et en retirant les nœuds dont les bords incidents ont été retirés ;
la mise à l'échelle du poids des bords restants du graphique dirigé par rapport à un nœud sélectionné du graphique, fournissant ainsi des valeurs de décalage dans le temps modifiées auxquelles des instances respectives parmi les instances de machines virtuelles de l'ensemble doivent être mises à l'échelle ; et
la mise à l'échelle d'instances respectives parmi les instances de machines virtuelles (202) de l'ensemble, les unes par rapport aux autres, selon des valeurs respectives parmi les valeurs de décalage dans le temps modifiées en réponse à la variation de la charge de travail de la composante d'application ou de service.

2. Procédé tel que revendiqué dans la revendication 1, dans lequel la génération d'une métrique agrégée comporte :

la détermination, à intervalles périodiques, de l'utilisation d'une ou plusieurs ressources par des machines respectives parmi les multiples machines virtuelles (202) ; et

la génération d'une somme vectorielle agrégée des utilisations de ressources pour des machines respectives parmi les multiples machines virtuelles (202).

**3.** Procédé tel que revendiqué dans la revendication 1 ou 2, dans lequel un nœud (401) du graphique dirigé représente une ressource d'une machine virtuelle (202) ou une mesure de ressource agrégée d'un ensemble de machines virtuelles qui exécutent la même composante d'application ou de service.

**4.** Procédé tel que revendiqué dans l'une des revendications précédentes, comprenant en outre :
pour des nœuds respectifs parmi les nœuds (401) du graphique dirigé, le calcul d'un chemin le plus court de source unique vers chaque nœud dans le graphique dirigé et la génération d'un vecteur des longueurs calculées, chaque vecteur comprenant des composantes représentant le décalage dans le temps de chaque nœud dans le graphique par rapport à un nœud de source pour le vecteur en question, fournissant ainsi un ensemble sérialisé de décalages dans le temps pour le graphique dirigé.

**5.** Procédé tel que revendiqué dans la revendication 4, comprenant en outre :

la sélection d'un vecteur de l'ensemble ayant une valeur de norme minimale ;
dans l'éventualité où le vecteur sélectionné comporte des composantes à valeur négative, l'ajout de la valeur absolue de la composante à valeur minimale aux composantes du vecteur sélectionné ; et
la détermination d'une ressource à surveiller sur la base de la composante du vecteur sélectionné ayant la valeur minimale.

**6.** Procédé tel que revendiqué dans la revendication 4 ou 5, comprenant en outre :
la résolution de conflits dans le cas d'une mise à l'échelle horizontale pour la composante d'application ou de service, dans laquelle un nombre d'instances de machines virtuelles pour la composante d'application ou de service peut être augmenté ou diminué, en ajoutant des ressources d'une machine virtuelle au premier moment requis par l'une quelconque des ressources ou en retirant les ressources d'une machine virtuelle au dernier moment requis par l'une quelconque des ressources, ou en ajoutant ou en retirant une instance de machine virtuelle pour une ressource.

**7.** Système comportant de multiples machines virtuelles (202) dans un programme exécuté sur un matériel informatique physique pris en charge par un hyperviseur, les multiples machines virtuelles fonctionnant pour exécuter une composante d'application ou de service dans une infrastructure en nuage, le système comportant :
un moteur d'orchestration (204) configuré pour :

générer des ensembles respectifs de métriques agrégées pour des machines respectives parmi de multiples machines virtuelles (202) ;
générer un graphique dirigé, dans lequel des nœuds (401) représentant une ressource d'une ou plusieurs des multiples machines virtuelles (202) sont reliés en utilisant un ou plusieurs bords, le poids de chacun des bords représentant une valeur de corrélation partielle décalée dans le temps et une valeur de décalage dans le temps représentant une mesure du moment où il faut mettre à l'échelle une ressource par rapport à une autre ;
réduire le nombre de machines virtuelles (202) devant être surveillées et mises à l'échelle pour fournir l'ensemble d'instances de machines virtuelles en retirant les bords du graphique dirigé dont le poids tombe en dessous d'une mesure seuil et en retirant les nœuds dont les bords incidents ont été retirés ;
mettre à l'échelle le poids des bords restants du graphique dirigé par rapport à un nœud sélectionné du graphique, fournissant ainsi des valeurs de décalage dans le temps modifiées auxquelles des instances respectives parmi les instances de machines virtuelles de l'ensemble doivent être mises à l'échelle ; et
mettre à l'échelle des instances respectives parmi les instances de machines virtuelles (202) de l'ensemble, les unes par rapport aux autres, selon des valeurs respectives parmi les valeurs de décalage dans le temps modifiées en réponse à la variation de la charge de travail de la composante d'application ou de service.

**8.** Système tel que revendiqué dans la revendication 7, dans lequel le moteur d'orchestration fonctionne pour :

déterminer, à intervalles périodiques, l'utilisation d'une ou plusieurs ressources par des machines respectives parmi les multiples machines virtuelles (202) ; et
générer une somme vectorielle agrégée des utilisations de ressources pour des machines respectives parmi les multiples machines virtuelles (202).

**9.** Système tel que revendiqué dans la revendication 7 ou 8, dans lequel un nœud (401) du graphique dirigé représente une ressource d'une machine virtuelle (202) ou une mesure de ressource agrégée d'un ensemble de machines virtuelles (202) qui exécutent la même composante d'application ou de service.

10. Système tel que revendiqué dans l'une des revendications 7 à 9, dans lequel le moteur d'orchestration (204) fonctionne pour :
pour des nœuds respectifs parmi les nœuds (401) du graphique dirigé, calculer un chemin le plus court de source unique vers chaque nœud dans le graphique dirigé et générer un vecteur de décalage dans le temps des longueurs calculées, chaque vecteur comprenant des composantes représentant le décalage dans le temps de chaque nœud dans le graphique par rapport à un nœud de source pour le vecteur en question, fournissant ainsi un ensemble sérialisé de décalages dans le temps pour le graphique dirigé.

11. Système tel que revendiqué dans la revendication 10, dans lequel le moteur d'orchestration (204) fonctionne pour :

sélectionner un vecteur de l'ensemble ayant une valeur de norme minimale ;
dans l'éventualité où le vecteur sélectionné comporte des composantes à valeur négative, ajouter la valeur absolue de la composante à valeur minimale aux composantes du vecteur sélectionné ; et
déterminer une ressource à surveiller sur la base de la composante du vecteur sélectionné ayant la valeur minimale.

12. Système tel que revendiqué dans la revendication 10 ou 11, dans lequel le moteur d'orchestration (204) fonctionne pour :
résoudre des conflits dans le cas d'une mise à l'échelle horizontale pour la composante d'application ou de service, dans laquelle un nombre d'instances de machines virtuelles pour la composante d'application ou de service peut être augmenté ou diminué, en ajoutant des ressources d'une machine virtuelle au premier moment requis par l'une quelconque des ressources ou en retirant des ressources d'une machine virtuelle au dernier moment requis par l'une quelconque des ressources, ou en ajoutant ou en retirant une instance de machine virtuelle pour une ressource.

13. Système tel que revendiqué dans l'une des revendications 7 à 12, dans lequel le moteur d'orchestration (204) fonctionne pour :
générer une demande de ressource pour la composante d'application ou de service fournissant une instruction pour ajouter ou retirer une ou plusieurs instances de machines virtuelles, ou pour augmenter ou diminuer la quantité de ressources disponibles à une ou plusieurs instances de machines virtuelles à des moments sectionnés selon la valeur de décalage dans le temps spécifié dans un vecteur de décalage dans le temps.

14. Produit de programme informatique, comprenant un support utilisable par ordinateur dans lequel est incorporé un code de programme lisible par ordinateur, ledit code de programme lisible par ordinateur étant adapté pour être exécuté pour mettre en œuvre un procédé de détermination d'un ensemble d'instances de machines virtuelles dans un système virtualité, devant être mises à l'échelle en réponse à une variation de la charge de travail d'une composante d'application ou de service tel que revendiqué dans l'une des revendications 1 à 6, lorsqu'il est exécuté par un moteur d'orchestration (204) du système.

101 — Gather inputs

103 — Decide "what to scale"

105 — Decide "when to scale"

107 — Resolve conflicts

109 — Apply to the service

FIG. 1

FIG. 2

*X*     ■◆○○       *X*     ■◆○○       *Z* ○○✦★
*Y* ○○▲+       *Z* ○○✦★       *Y* ○○▲+

$P_{XY}(2)$        $P_{XZ}(2)$        $P_{ZY}(0)$

(a)          (b)          (c)

FIG. 3

FIG. 4

$V_1 = (0, -2, 0, -1, -4, 1)$

(a)

$V_5 = (3, 1, 4, 3, 0, 5)$

(b)

FIG. 5

FIG. 6

FIG. 7

800

Input gathering
Program
**823**

Aggregated metric
generation program
**823**

Directed graph
generation program
**825**

Edge/node removal
Program
**827**

Conflict resolution
program
**829**

Scaling program
**831**

Instruction Program
**833**

**820**

Processor
**810**

Data
Storage
**811**

I/O Interface
**830**

FIG. 8

**REFERENCES CITED IN THE DESCRIPTION**

**Patent documents cited in the description**

- US 20l4l43773 A
- US 9043785 B1

- WO 2013097552 A1